# EUROPEAN PATENT SPECIFICATION

(11) **EP 1 925 380 B1**
(45) Date of publication and mention of the grant of the patent: **14.07.2010**
(21) Application number: 07120206.3
(22) Date of filing: 07.11.2007
(51) Int. Cl.: B21D 43/11

(54) **Machine with a manipulator for metal sheets**
Maschine mit einem Manipulator für Metallbleche
Machine avec un manipulateur pour tôles

(30) Priority: 23.11.2006 IT MI20062240
(43) Date of publication of application: 28.05.2008
(73) Proprietor: SALVAGNINI ITALIA S.p.A., 36040 Sarego (VI) (IT)
(72) Inventor: Battheu, Claude, 39015, Schio (VI) (IT); Venturini, Gianfranco, 37044, Cologna Veneta (VR) (IT)
(74) Representative: Mittler, Enrico

(56) References cited:
- EP-A- 0 123 183
- EP-A- 1 447 156
- US-A- 4 023 788
- US-A- 4 274 801
- US-A- 5 701 791

## Description

The present invention relates to a combination of a working machine and a manipulator for metal sheets.

Manipulators for metal sheets are generally known comprising an operating head for machining the sheets, pickup means for picking up the sheets and means for shifting the metal sheets and supplying the metal sheets to the operating head.

Traditional manipulators comprise a sole pinion and a rack to which the pickup means for the metal sheet are attached. The pinion-rack apparatus comprises a rack of a certain length and a driven pinion for moving the rack; pickup means for a metal sheet are associated with the rack.

EP 0123183 discloses a machine tool for flat workpieces such as sheet material includes at least one work station, a first guidance assembly with a workpiece holding device movable in at least one direction relative to the work station and a second guidance assembly with a workpiece holding device independently operable in addition to, or alternatively with, the first workpiece holding device and adapted to be engaged with the workpiece so as to effect its movement independently of or concurrently with the first workpiece holding device. The machine tool desirably includes a computer control for operating the tool work station and the workpiece holding devices, and each of such workpiece holding devices includes at least a pair of workpiece clamping elements with adjustable spacing therebetween.; The machine tool may include a pair of machine frames with cantilevered portions extending oppositely of each other and each providing at least one work station or a portion thereof.

In view of the prior art, the object of the present invention is to provide a manipulator for metal sheets that is more efficient than known manipulators, and in particular permits a longer rack stroke for the same length of rack or the use of a shorter and therefore stiffer and less heavy rack for the same stroke.

According to the present invention, said object is achieved by means of a combination of a working machine and a manipulator for a metal sheet as defined in claim 1.

The features and advantages of the present invention will be clearer from the following description of an embodiment thereof illustrated by way of an example in the attached drawings, in which:
figure 1 is a diagram of an apparatus with pinion and rack of a known manipulator;
figure 2 is a diagram of an apparatus with pinions and rack of a manipulator used in the combination according to the present invention;
figures 3-5 are diagrams of a manipulator used in the combination according to the present invention during the steps of moving the metal sheet;
figure 6 is a diagram of a part of the pinion-rack apparatus of the manipulator in figure 4.

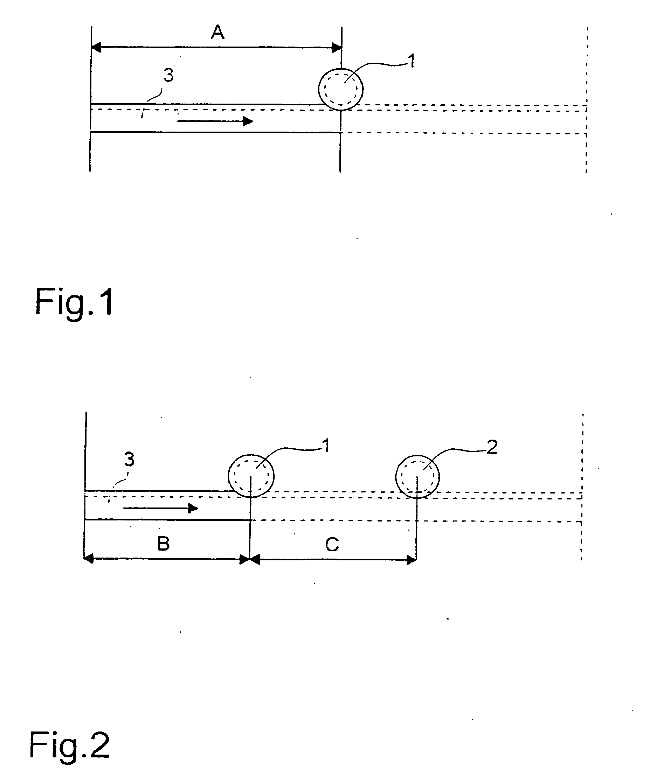

With reference to figure 1 there is shown schematically an apparatus according to the prior art, comprising a sole pinion 1 with a rack 3 of a length A that is able to perform strokes of the same length.

With reference to figure 2 there is shown schematically a pinion-rack apparatus of a manipulator used in the combination according to the present invention. The apparatus comprises a first pinion 1 and a second pinion 2 that are placed at a mutual distance C and are engageable with a rack 3 that has a length B that is less than the length A of the rack in figure 1. In a first work step the rack 3 is moved by the pinion 1, in a subsequent step it is moved by both pinions 1 and 2 and in the final step by pinion 2 only.

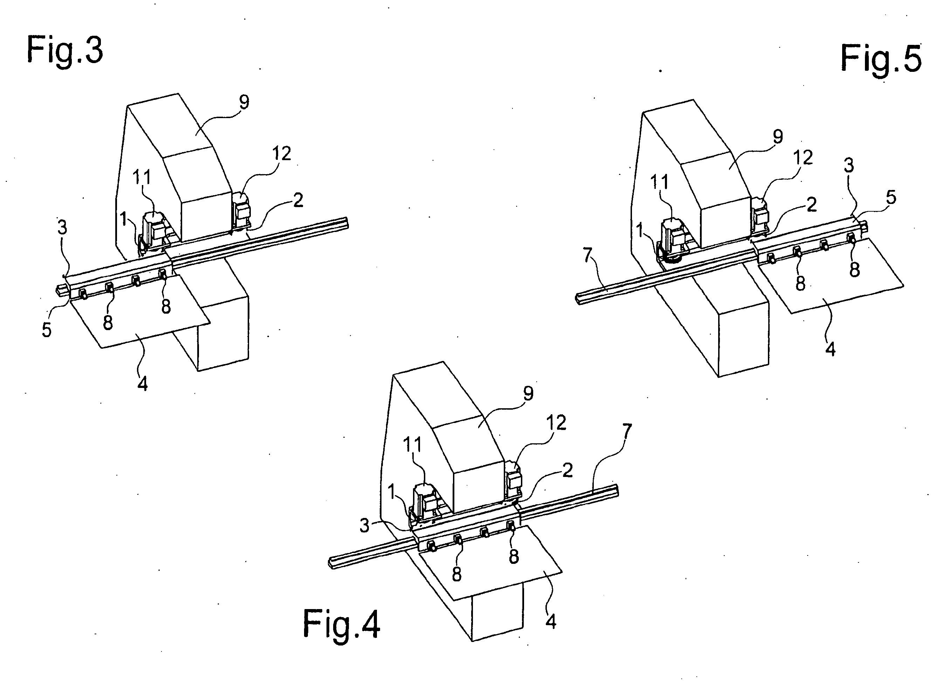

In figures 3-5 there is shown a manipulator used in the combination according to the present invention in the steps of moving a metal sheet 4; the manipulator comprises the pinion-rack apparatus in figure 2.

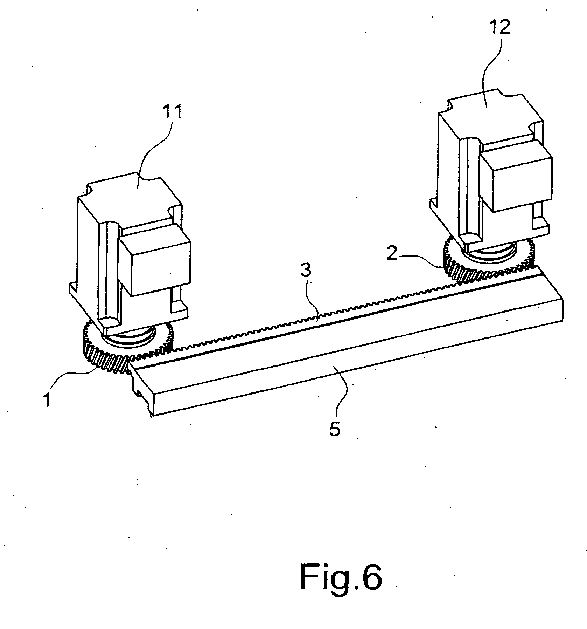

A bar 5 that is slidable in a horizontal direction on a guide 7 that is integral with the manipulator comprises grippers 8 for picking up the metal sheet 4 and the rack 3. The pinions 1 and 2 are preferably interrupted by an operating head 9 in the movement path of the metal sheet 4 and in such a manner that at least one of the pinions is engaged with the rack 3; the pinions are preferably arranged symmetrically with respect to the operating head 9. The pinions 1 and 2 are driven by suitable electric motors 11 and 12 as more clearly visible in figure 6.

In a first step (figure 3) of supplying the metal sheet 4 the rack 3 is moved by pinion 1 only to obtain a horizontal shift of the metal sheet 4 to the operating head 9.

In a second step (figure 4) of machining the metal sheet 4 the rack 3 is moved by both pinions 1 and 2 with the metal sheet placed below the operating head 9.

In a third step of ejecting the metal sheet 4 (figure 5), the rack 3 is moved by pinion 2 only to obtain a horizontal shift of the metal sheet 4 away from the operating head 9.

With said manipulator it is possible to decrease the length and the weight of the rack 3 whilst maintaining the same stroke or, whilst maintaining the same length, stiffness and weight of the rack, it is possible to increase the stroke of the rack if suitable torque is available.

It is clear that although the embodiment shown in the drawings includes two pinions 1 and 2, the number of pinions can also be higher without falling outside the protective scope of the claimed invention. In substance, the number of pinions may vary from 2 to n.

## Claims

1. Combination of a working machine and a manipulator for a metal sheet (4), said working machine comprising an operating head (9) and said manipulator comprising pickup means (8) for picking up said metal sheet, which pickup means (8) is connected to a rack (3) associable with a first pinion (1) and said operating head (9), **characterised in that** it comprises at least one second pinion (2), said first (1) and second (2) pinion being arranged on the same side of the metal sheet (4) along the movement path of the metal sheet (4), whereby in operation at a first working step only one of said first (1) and second (2) pinions is suitable to be engaged each time with said rack (3), and whereby at a second working step both the first (1) and second (2) pinions are suitable to be engaged sometime with said rack (3) to move the rack from one part to the other of the operating head (9).

2. Combination according to claim 1, **characterised in that** said first (1) and second (2) pinions are interrupted by the operating head (9) in the movement path of the metal sheet (4).

3. Combination according to claim 2, **characterised in that** said first (1) and second (2) pinions are arranged in a symmetrical manner with respect to the operating head (9) in the movement path of the metal sheet (4).

## Patentansprüche

1. Kombination aus einer Bearbeitungsmaschine und einem Manipulator für Blech (4), wobei die Bearbeitungsmaschine einen Antriebskopf (9) aufweist und der Manipulator eine Aufnahmeeinrichtung (8) zum Aufnehmen des Blechs aufeist, weiche Aufnahmeeinrichtung (8) mit einer Zahnstange (3) verbunden ist, die mit einem ersten Antriebszahnrad (1) und dem Antriebskopf (9) verbindbar ist, **dadurch gekennzeichnet, dass** sie wenigstens ein zweites Antriebszahnrad (2) aufweist, wobei das erste (1) und das zweite (2) Antriebszahnrad auf derselben Seite des Blechs entlang dem Bewegungspfad des Blechs (4) angeordnet sind, wodurch in Betrieb bei einem ersten Bearbeitungsschritt nur eines des ersten (1) und des zweiten (2) Antriebszahnrads dazu geeignet ist, jedes Mal mit der Zahnstange (3) in Eingriff zu sein, und wodurch bei einem zweiten Bearbeitungsschritt sowohl das erste (1) als auch das zweite (2) Antriebszahnrad dazu geeignet sind, manchmal in Eingriff mit der Zahnstange (3) zu sein, um die Zahnstange von einem Teil des Antriebskopfs (9) zu dem anderen zu bewegen.

2. Kombination nach Anspruch 1, **dadurch gekennzeichnet, dass** das erste (1) und das zweite (2) Antriebszahnrad in dem Bewegungspfad des Blechs (4) durch den Antriebskopf (9) unterbrochen sind.

3. Kombination nach Anspruch 2, **dadurch gekennzeichnet, dass** das erste (1) und das zweite (2) Antriebszahnrad in Bezug auf den Antriebskopf (9) in dem Bewegungspfad des Blechs (4) auf symmetrische Weise angeordnet sind.

## Revendications

1. Combinaison d'une machine et d'un manipulateur pour une tôle (4), ladite machine comprenant une tête d'actionnement (9) et ledit manipulateur comprenant un moyen de levage (8) pour saisir ladite tôle, lequel moyen de levage (8) est connecté à une crémaillère (3) pouvant être associée à un premier pignon (1) et à ladite tête d'actionnement (9), **caractérisée en ce qu'**elle comprend au moins un deuxième pignon (2), lesdits premier (1) et deuxième (2) pignons étant placés du même côté de la tôle (4) le long du chemin de déplacement de la tôle (4), moyennant quoi en fonctionnement dans une première étape fonctionnelle seulement, un desdits premier (1) et deuxième (2) pignons est adapté pour être mis en prise à chaque fois avec ladite crémaillère (3), et moyennant quoi le premier (1) et le deuxième (2) pignons sont tous deux adaptés pour être mis en prise à un moment avec ladite crémaillère (3) pour déplacer la crémaillère d'une partie à l'autre de la tête d'actionnement (9).

2. Combinaison selon la revendication 1, **caractérisée en ce que** lesdits premier (1) et deuxième (2) pignons sont interrompus par la tête d'actionnement (9) dans le chemin de déplacement de la tôle (4).

3. Combinaison selon la revendication 2, **caractérisée en ce que** lesdits premier (1) et deuxième (2) pignons sont placés de manière symétrique par rapport à la tête d'actionnement (9) dans le chemin de déplacement de la tôle (4).
